# FASCICULE DE BREVET EUROPEEN

(11) **EP 3 314 597 B1**
(45) Date de publication et mention de la délivrance du brevet: **27.11.2019**
(21) Numéro de dépôt: 16734430.8
(22) Date de dépôt: 08.06.2016
(51) Int. Cl.: G08C 17/02, G06F 3/01

(54) **ÉQUIPEMENT DE TÉLÉCOMMANDE**
FERNSTEUERUNG
REMOTE CONTROL

(30) Priorité: 23.06.2015 FR 1555737
(43) Date de publication de la demande: 02.05.2018
(73) Titulaire: SIATECH, 76000 Rouen (FR)
(72) Inventeur: HAMAIN, Frédéric, 76116 Ry (FR); IRIART, Nicolas, 76140 Le Petit Quevilly (FR); KLIS, Nicolas, 11100 Narbonne (FR)
(74) Mandataire: IP Trust
(86) Numéro de dépôt international: PCT/FR2016/051374
(87) Numéro de publication internationale: WO 2016/207505

(56) Documents cités:
- WO-A1-2012/054443
- WO-A1-2014/164168
- US-A1- 2014 358 263

## Description

### Domaine de l'invention

La présente invention concerne le domaine de la télécommande, notamment d'équipements industriels, et plus particulièrement d'engins tels que des engins de levage et de manutention, notamment les portiques, ponts roulants, grues, charriots élévateurs, transpalettes, gerbeurs, chariots préparateurs de commande, treuils de camions, grues, portique élévateur d'embarcation, entrepôts logistiques automatiques ainsi que les engins mobiles : Bennes, remorques/passerelles de bateau, foreuses de tunnels, pompes/bétonnières embarquées, foreuses, broyeurs, bras de démolition, engins de chantier, véhicules de nettoyage, engins ferroviaires, engins forestiers et agricoles

Le contrôle à distance est un mode de commande usuel dans les environnements industriels. Récemment, le développement de technologies abordables de capture de mouvement a ouvert la voie à des solutions de télécommandes pour piloter directement l'appareil avec son corps. Le but est de développer un contrôle intuitif entre l'homme et la machine.

### Etat de la technique

On connait dans l'état de la technique des solutions de contrôle placées au niveau de la main de l'opérateur pour lui permettre ainsi d'agir sur l'appareil à contrôler.

On connaît par exemple la demande internationale WO 2014164168 divulguant un système de commande pour un véhicule de manutention de matériaux, comprenant un dispositif de commande à distance sans fil portatif qui est porté par un opérateur qui interagit avec le véhicule de manutention de matériaux et inclut une zone d'accueil, un dispositif de communication à fixation amovible et une commande de déplacement. La commande de déplacement est connectée de manière communicante avec l'émetteur sans fil, l'actionnement de la commande de déplacement ayant pour effet que l'émetteur sans fil émet une demande de déplacement sous la forme d'un signal de premier type demandant au véhicule de manutention de matériaux de se déplacer sur la surface d'un sol dans une première direction.

On connaît aussi la demande de brevet américain US2014358263 divulguant un système de commande pour faire fonctionner sélectivement un système sonore, par exemple, pour lire des fichiers audio dans un ordre défini par une arborescence de dialogue. Le système de commande comprend un mécanisme de déclenchement prévu dans un costume qui peut être actionné par un artiste portant le costume pour générer et transmettre au moins un signal de déclenchement pour naviguer à travers un arbre de dialogue. Un dispositif de commande reçoit le signal de déclenchement et transmet un signal de commande amenant le système audio pour la lecture de dialogue préenregistré.

On connaît enfin la demande internationale WO 2012054443 décrivant un gant de commande électronique permettant une commande améliorée sur des dispositifs électroniques sans fil, à partir des bouts des doigts de l'utilisateur. Le gant est fabriqué avec des matériaux conducteurs le long des doigts et du pouce, un contact du matériau conducteur d'un doigt et du matériau conducteur du pouce créant un circuit fermé qui est transmis à un dispositif de commande sur le gant qui peut ensuite émettre de manière sans fil des messages à des dispositifs électroniques à distance, tels que des téléphones cellulaires, des lecteurs audio, des dispositifs d'ouverture de porte de garage, un matériel et un logiciel militaires, dans des environnement de travail, etc.

### Inconvénients de l'art antérieur

Ces solutions ne sont pas totalement satisfaisantes pour une utilisation en environnement industriel. Dans de tels environnements, la sécurité constitue une contrainte majeure. Il est essentiel d'éviter toute commande inopportune résultant par exemple d'un mouvement involontaire de la main équipée d'un gant de télécommande, ou d'une sélection inappropriée d'une touche pour des équipements proposant, comme celui décrit dans la demande internationale WO 2014164168, une multitude de touches correspondant chacune à une action spécifique.

L'utilisation d'un tel gant nécessite un apprentissage pour permettre une action quasiment réflexe, sans risque de confusion entre les différentes touches disponibles. L'action involontaire ou inappropriée sur une touche déclenche de manière irréversible une action de l'équipement commandé qui peut être au mieux inopportune, mais parfois dangereuse.

Par ailleurs, les équipements de télécommande sont soumis à des agressions multiples (chocs, transpiration, poussière, humidité,....)

Les gants proposés dans l'état de la technique ne permettent pas de répondre pleinement à ces problèmes car ils nécessitent la disponibilité d'un grand nombre de tailles afin de permettre à chaque opérateur de disposer d'un gant de télécommande adapté à sa morphologie. De plus, les gants sont soumis à des contraintes fortes peu compatibles avec l'intégration d'un composant électronique.

### Solution apportée par l'invention

Afin de répondre à ces inconvénients, l'invention concerne selon son acception la plus générale un équipement de télécommande comportant un circuit électronique comprenant au moins un moyen de détection de la position, de l'orientation et du déplacement de la main et / ou de l'avant-bras, notamment un accéléromètre, des moyens de transmission radiofréquence d'un signal de commande calculé en fonction de la position, de l'orientation et du déplacement mesuré, et un moyen de liaison avec l'avant-bras d'un opérateur, caractérisé en ce qu'il comporte en outre un contacteur apte à être actionné par l'interaction de deux doigts, ledit contacteur commandant l'activation dudit circuit électronique ainsi que le maintien du signal de commande jusqu'à l'arrêt de l'action sur ledit contacteur, ainsi qu'une surface d'appui associée à un contacteur commandant un arrêt d'urgence de l'équipement commandé.

Cette solution résout le problème de la sécurité de fonctionnement notamment en ce qui concerne les perturbations venant de mouvements involontaires de l'opérateur. Elle permet aussi une utilisation très intuitive, ne nécessitant qu'un apprentissage très simple, avec une grande richesse des ordres qu'il est possible de transmettre, l'opérateur n'ayant à agir que pour activer ou désactiver la transmission des instructions acquises par ailleurs en continu par les mouvements de sa main, son bras ou avant-bras.

Avantageusement, ledit circuit électronique comporte un détecteur de seuil pour générer un signal de commande lorsque le signal mesuré par l'accéléromètre dépasse une valeur seuil, ainsi que le maintien de ce signal de commande jusqu'à l'interruption de l'action sur ledit contacteur.

De préférence, l'équipement selon l'invention est constitué par des modules complémentaires comprenant un bracelet, un boîtier contenant le circuit électronique et l'accéléromètre, et un contacteur apte à entourer un doigt.

De préférence, ledit accéléromètre détecte les accélérations selon trois axes perpendiculaires.

Selon une variante, un gyroscope détecte la position angulaire selon trois axes de rotation.

Selon une autre variante, il comporte en outre un magnétomètre détectant l'orientation magnétique.

Selon une autre variante, il comporte en outre une centrale inertielle composée d'un accéléromètre trois axes perpendiculaire, d'un gyroscope trois axes de rotation et d'un magnétomètre trois axes.

Avantageusement ladite centrale inertielle détecte l'inclinaison, l'orientation et les accélérations selon trois axes perpendiculaires.

De préférence, l'équipement comporte en outre un bouton d'arrêt d'urgence.

Selon un mode de réalisation avantageux, il comporte en outre un connecteur unique du boitier destiné au raccordement du doigtier et à la recharge.

Selon une variante, il comporte en outre un deuxième contacteur placé sur le circuit électronique et destiné à être commandé par la deuxième main.

Selon une autre variante, l'équipement comporte en outre une pluralité de contacteurs pour sélectionner l'équipement commandé ou sélectionner la fonctionnalité de l'équipement commandé.

Avantageusement, le contacteur (7) est digital, progressif ou à deux états.

Selon une réalisation particulière, l'équipement comporte en outre des moyens pour commander un mode pianotage en fonction de la mémorisation de la dernière direction détectée par l'accéléromètre et des actions répétées sur le contacteur.

Selon un autre mode de réalisation particulier, il comporte en outre des moyens pour commander le déplacement à deux vitesses.

L'invention concerne aussi un procédé de contrôle d'un matériel selon un protocole décrit ci-après.

### Description détaillée d'un exemple non limitatif de réalisation

La présente invention sera mieux comprise à la lecture de la description qui suit d'un exemple non limitatif de réalisation, se référant aux dessins annexés où :

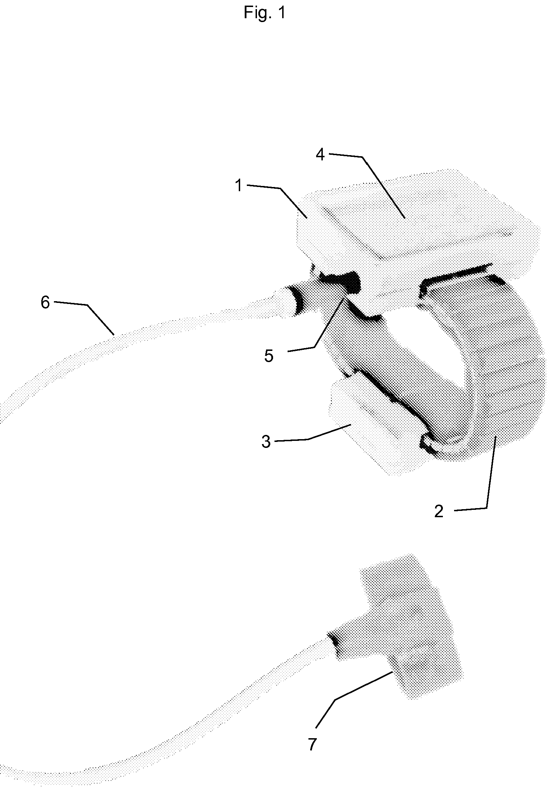

- La figure 1 représente une vue schématique d'un équipement selon l'invention

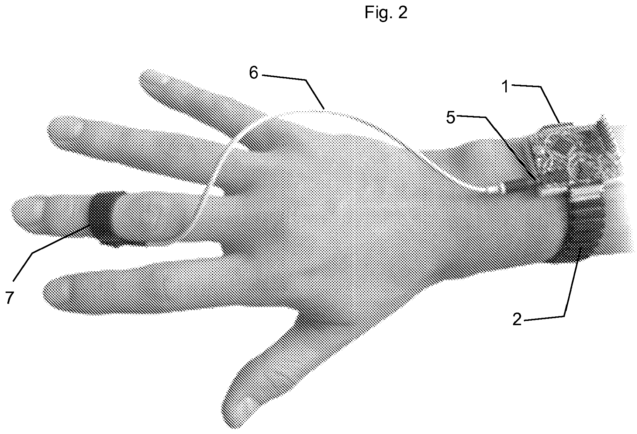

- la figure 2 représente une vue d'un équipement selon l'invention porté par un opérateur
- la figure 3 représente le graphique temporel des signaux
- la figure 4 représente le schéma de principe du circuit de commande.

Dans le monde actuel, le contrôle à distance est omniprésent à tous les niveaux. L'objectif est de remplacer les télécommandes traditionnelles en pilotant directement l'appareil avec son corps. En effet, il s'agit de développer un contrôle intuitif entre l'homme et la machine. Ce contrôle sera placé au niveau de la main et l'opérateur pourra ainsi agir sur l'appareil à contrôler. Les applications étant nombreuses, nous avons dû nous focaliser sur un domaine d'application. Nous avons choisi le domaine industriel, et plus précisément le domaine de la manutention. Nous souhaitons contrôler les appareils « pilotables » du milieu de la manutention, et notamment les ponts roulants.

La quasi-totalité des ponts roulants sont commandés par le biais d'une télécommande, d'une cabine de pilotage ou d'une interface informatique pour faire le lien entre l'homme et la machine. Pour ce qui concerne les télécommandes, il en existe des filaires et des sans fil. Ces outils électroniques de communication sans fil ont le défaut d'être encombrants, peuvent être facilement perdu et nécessitent de maintenir le regard visuel lors de l'Appui sur une touche.

Le besoin premier satisfait par la présente invention est de faire disparaître les principales contraintes des télécommandes mais aussi d'établir un contrôle supplémentaire dans l'interaction avec les différents appareils qui entourent l'utilisateur qui n'aura plus l'inquiétude de transporter, de casser, de chercher sa télécommande car elle sera toujours à "portée de main" et pourra se concentrer sur l'évolution de l'équipement commandé, en raison du fonctionnement très intuitif de l'équipement de télécommande.

L'utilisateur commande les déplacements simplement grâce aux déplacements de la main (par exemple un déplacement de la main vers la droite engendrera un déplacement du pont roulant vers la droite) et la validation de la transmission par une action sur un contacteur.

L'équipement est composé de deux modules complémentaires. L'un des modules est placé au niveau du poignet, celui-ci contient l'intelligence du dispositif à savoir le microcontrôleur, les capteurs (IMU), l'électronique de transmission et une batterie. Le second module est sous la forme d'une bague filaire placé au niveau de la phalange intermédiaire du majeur ou de l'index. Ce second module constitue la partie modulable du dispositif et permet d'autoriser la captation du mouvement par simple Appui sur le contacteur.

### Premier exemple de réalisation

L'exemple de réalisation non limitatif de l'invention concerne un équipement de contrôle à distance d'un pont roulant grâce aux déplacements de la main.

L'équipement comprend un boitier (1) qui est, dans l'exemple décrit, adaptable par une liaison mécanique réversible à un bracelet (2).

Ce boîtier (1) renferme le circuit électronique comportant un microcontrôleur, un accéléromètre, une batterie et un circuit de pilotage de la recharge de la batterie. Il présente à sa partie supérieure une surface (4) associée à un contacteur permettant à l'utilisateur de commander une fonction d'arrêt d'urgence de l'équipement commandé.

Le boîtier (1) présente également sur l'une de ses faces latérales une prise (5) remplissant une double fonction :
- en dehors des périodes d'utilisation, elle permet le branchement d'un connecteur pour la recharge de la batterie intégrée dans le boîtier (1)
- pendant l'utilisation, elle permet le branchement d'un câble (6) reliant les circuits du boîtier (1) à un contacteur digital (7).

Ce bracelet porte dans l'exemple décrit à titre non limitatif un deuxième boîtier (3) comportant un circuit électronique de transmission à distance selon un protocole tel que Bluetooth ou Xbee ainsi qu'un interrupteur général. Alternativement à cet interrupteur général de mise en veille, le circuit électronique peut comporter des moyens de gestion automatique de la mise en veille ou d'activation par une temporisation modifiant la période de détection des mouvements rendant ledit interrupteur optionnel. Pendant l'utilisation, la fréquence d'acquisition des signaux délivrés par l'accéléromètre est élevée, par exemple 50 fois par secondes. En cas d'absence de signaux détectés pendant une période prédéterminée, par exemple plusieurs minutes, cette fréquence d'acquisition est réduite à une acquisition pendant une période de quelques secondes toutes les dix minutes par exemple. La détection d'un mouvement pendant ces périodes d'acquisition fait sortir le circuit du mode veille pour basculer en mode actif.

Ce bracelet équipé des circuits électroniques est relié à un micro contacteur présentant la forme d'une bague ou d'un doigtier placé sur la phalange intermédiaire du majeur ou de l'index et permet d'autoriser la captation du mouvement suivant son état.

Ce micro-contacteur est commandé par la pression d'un autre doigt, normalement le pouce, contre la bague entourant un autre doigt.

Le fonctionnement de l'équipement est le suivant.

Lorsque le bracelet est mis en place, les mouvements de l'avant-bras de l'opérateur déclenchent le passage en mode actif.

Tant que le contacteur équipant la bague (7) n'est pas activé, les signaux générés par l'accéléromètre ne sont pas pris en compte et le circuit de transmission à distance ne transmet pas de signaux de commande au récepteur équipant le matériel, par exemple le portique contrôlé.

Le circuit électronique peut néanmoins produire des trames de services transmises au matériel contrôlé, contenant par exemple des informations sur l'état du circuit électronique, l'identifiant du circuit enregistré dans une mémoire, l'état de charge de la batterie ou encore la puissance du signal émis.

Lorsque l'opérateur actionne le micro-contacteur prévu sur le doigtier (7), le circuit électronique analyse les signaux transmis par l'accéléromètre pour déterminer la direction de déplacement de l'équipement. Lorsqu'il s'agit d'un accéléromètre à trois axes, le traitement consiste à déterminer la direction la plus probable (vertical, latéral, longitudinal) et son sens (haut/bas ; droite/gauche ; avant/arrière). Le circuit électronique transmet par l'intermédiaire du circuit radio-fréquence cette information au récepteur équipant le matériel contrôlé, pendant la durée pendant laquelle l'opérateur maintient le micro-contacteur en mode actif. Dès que l'action sur le contacteur est interrompue, l'équipement transmet un signal d'arrêt du déplacement en cours.

Pendant cette séquence, la direction et le sens de déplacement reste celui détecté au moment de l'activation du contacteur. Si l'opérateur bouge ensuite son bras dans d'autres directions, cela n'a pas d'effet sur la nature du déplacement du matériel commandé après un délai prédéterminé.

Selon une variante de cette séquence afin de permettre une combinaison de déplacement (par exemple droite et bas), l'opérateur effectuera une combinaison de mouvements pendant ce délai prédéterminé.

Selon une variante de réalisation, une action répétée sur le contacteur, pendant une période de temps limité, par exemple deux pressions espacées de moins d'une seconde prolongée par un maintien de la pression, provoque le basculement d'un premier mode de déplacement à un second mode de déplacement (par exemple rapide/lent) ou des déplacements incrémentaux par saccade, mais toujours dans la direction et le sens initial, détecté lors de la première action sur le contacteur.

Selon une autre variante, l'équipement comprend également un gyroscope fournissant un signal variant en fonction de la rotation selon un ou plusieurs axes, pour commander des déplacements en rotation ou pour commander l'arrêt d'un déplacement.

Selon une autre variante l'équipement comprend également un capteur de type centrale inertielle, permettant de déterminer une accélération et un déplacement du bras de l'opérateur non pas dans le référentiel de l'opérateur, mais dans un référentiel absolu. Cette variante permet de commander le déplacement de manière intuitive quelle que soit la position relative de l'opérateur par rapport au matériel commandé.

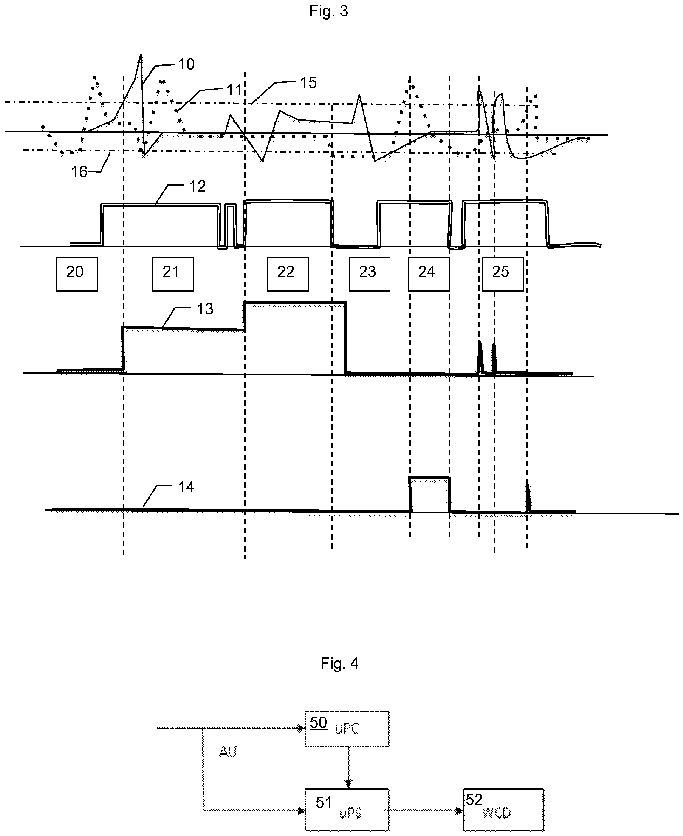

La figure 3 représente une vue simplifiée des différents signaux traités par l'équipement.

Le graphe supérieur représente des exemples de signaux d'accélération détectés par deux voies d'un accéléromètre, par exemple :
- un axe détectant les déplacements de l'avant-bras selon une direction verticale « haut/bas », et délivrant un signal Aᵥ (10) illustré par la ligne continue, et
- un axe détectant les déplacements de l'avant-bras selon une direction horizontale « gauche/droite », et délivrant un signal A_{gd} (11) illustré par la ligne pointillée.

Le graphe suivant correspond à l'état du micro-contacteur, avec un niveau 0 correspond à l'absence d'action sur le micro-contacteur, et un niveau 1 correspondant à l'état où l'opérateur Appui sur le micro-contacteur. La courbe (12) représente un exemple d'une succession d'actions sur ce micro-contacteur.

Les deux derniers graphes représentent l'état de la commande de déplacement du matériel télécommandé, avec un niveau 0 correspondant à l'arrêt et des niveaux « +1 » ou « - 1) correspondant au sens du déplacement, et éventuellement, pour chaque sens de déplacement, un niveau « déplacement lent » et un niveau « déplacement rapide », pour deux direction de déplacement,
- levage-dépose correspondant à la courbe (13)
- déplacement latéral d'un chariot correspondant à la courbe (14).

Pour les signaux délivrés par l'accéléromètre trois-axes, on prend en compte le dépassement d'une valeur-seuil correspondant aux courbes (15, 16). Ces courbes sont préférentiellement constantes. Elles peuvent aussi être variables, par exemple en fonction de données historiques pour permettre un ajustement en fonction de la typologie des mouvements de l'opérateur, pendant une étape d'apprentissage, ou en fonction de données venant du matériel commandé, pour adapter la sensibilité de la détection des mouvements de l'avant-bras à la nature des opérations à contrôler.

Tant que l'état du micro-contacteur est « 0 », comme dans la séquence illustrée par la référence (20), les signaux (10, 11) de l'accéléromètre ne sont pas pris en compte, même lorsqu'ils dépassent la valeur seuil (15).

Lorsque l'état du micro-contacteur est « 1 », rien ne se passe jusqu'au moment où l'un des signaux (10, 11) des accéléromètres dépasse la valeur-seuil (15).

Lorsque, conjointement, l'état du micro-contacteur est « 1 », et un dépassement de seuil est détecté sur l'un des signaux (10), l'équipement transmet un signal (13) de déplacement correspondant à l'accéléromètre dont le dépassement de la valeur seuil a été détecté. Dans cet exemple, la séquence référencée (21) illustre une situation où le signal Aᵥ a dépassé transitoirement la valeur-seuil, ce qui active le déplacement « levage-dépose » du matériel. Ce déplacement est maintenu ensuite, même si le signal Aᵥ retombe à une valeur inférieure à la valeur-seuil, tant que l'état du micro-contrôleur ne passe pas à un état « 0 » pendant une durée supérieure à une durée prédéterminée T_{fin}, par exemple une seconde.

Des micro-interruptions durant moins d'une seconde n'interrompent pas l'émission d'un signal de contrôle, mais peuvent commander le basculement dans un autre mode de fonctionnement, par exemple :
- deux micro-interruptions séparées d'une durée inférieure à T_{fin} provoque le basculement de l'état de déplacement, du mode lent au mode rapide, dans la même direction et le même sens que celui qui était actif avant ces micro-interruptions,
- une micro-interruption séparée d'une durée inférieure à T_{fin} provoque le passage en mode de déplacement saccadé.

La séquence référencée (22) illustre la situation où l'opérateur a brièvement interrompu l'action sur le micro-contacteur, avec une répétition, alors que le signal de contrôle commandait le déplacement dans le sens « levage ». Ce déplacement se poursuit alors, mais à une vitesse accélérée.

La séquence (23) illustre une séquence où l'opérateur a interrompu l'action sur le micro-contacteur pendant une durée supérieure à T_{fin}. Le déplacement du matériel contrôlé s'interrompt à la fin du délai T_{fin} suivant l'arrêt de l'action sur le micro-contacteur.

Ensuite, lorsque l'opérateur Appui à nouveau sur le micro-contacteur, l'équipement reprend la détection du dépassement de la valeur seuil (15) par l'un des signaux (10, 11) de l'accéléromètre, pour commander un nouveau déplacement du matériel contrôlé.

Dans l'exemple décrit et référencé par la séquence (24), le premier signal détecté dépassant la valeur seuil est le signal (11), ce qui va activer le déplacement latéral d'un chariot selon une commande représentée par la courbe (14).

Lorsque l'opérateur relâche brièvement, pendant une durée inférieure à T_{fin}, l'action sur le micro-contacteur, comme illustré par la séquence (25), il enclenche le mode « saccades ». Dans ce mode, chaque fois que l'un des signaux (10, 11) délivré par l'un quelconque des axes de l'accéléromètre dépasse la valeur seuil (15, 16), l'équipement commande le déplacement selon la direction et le sens correspondant, pendant une impulsion brève, et ce temps que l'action sur le micro-contacteur est maintenue.

Ce mode permet à l'opérateur d'ajuster finement la position du matériel commandé, par des petites secousses de l'avant-bras selon l'un quelconque des axes. Optionnellement, ce mode commande en outre une variation des valeurs-seuils (15, 16) afin d'améliorer la sensibilité de l'équipement dans cette étape de réglage fin.

Selon une variante, lorsque l'opérateur relâche brièvement l'action sur le micro-contacteur, en effectuant une rotation de la main pendant une durée inférieure à T_{fin}, il enclenche le mode « pianotage/ saccades ». Dans ce mode, chaque micro interruptions pendant une durée inférieure à T_{fin} va permettre de commander le déplacement selon la dernière direction et le dernier sens correspondant, et ce tant que l'action sur le micro-interrupteur est maintenue.

Ce mode permet à l'opérateur d'ajuster finement la position du matériel commandé, par les micros interruptions.

### Circuit électronique

L'électronique comprend:
- Deux microcontrôleurs : uP commande et uP sécurité
- Une IMU
- Un arrêt d'urgence
- Un module de transmission (Sub Ghz)
- Une batterie 3.7V 200mAh
- Une connectique de recharge (Jack)
- Une connectique pour brancher la partie modulable (Jack)
- Une mémoire (FRAM)

Concernant la partie modulable/jetable, elle se compose d'une bague intégrant un double contacteur de contrôle. Cette bague contacteur est reliée au module principal par une liaison filaire et une connectique à valider ou à définir. Le bracelet sera aussi une partie modulable / jetable.

Ces composants doivent permettre d'atteindre une autonomie minimum d'une semaine. Ces composants seront de nature low energy. Afin d'obtenir une ergonomie optimale, l'ensemble de ces éléments sera concentré dans un même boitier (deux boitiers pour le démonstrateur) et miniaturisé.

La figure 4 représente une schéma de principe d'un circuit électronique, comprenant un microprocesseur (50), un microcontrôleur de sécurité (51) et un circuit temporisateur (52) de type « watchdog timer » permettant au microprocesseur (50), de reprendre la main en cas de plantage par l'envoi d'une commande RESET externe.

Le microprocesseur (50) comprend une mémoire flash TXFIFO. Il commande l'envoi d'une trame d'arrêt d'urgence tout les 10 ms jusqu'à la réception d'une trame d'acquittement ACK (Acknowledge signal radio signifiant que la réception a bien reçu le message).

En cas de réception de la trame d'acquittement ACK, il envoie un message AU_OK au microcontrôleur de sécurité (51) et attend la fin d'arrêt d'urgence.

Après la fin d'arrêt d'urgence, il informe le microcontrôleur de sécurité (51) et le pont de fin d'état d'urgence et bascule sur la fréquence de broadcast.

Le microcontrôleur de sécurité (51) configure le circuit temporisateur (52) à 100ms. A la fn d'arrêt d'urgence, il reconfigure circuit temporisateur (52) à 550 ms et bascule en mode veille.

Deux bus SPI sont utilisés : comme la trame est envoyée toutes les 250ms, si le bus SPI est occupé par une transaction avec IMU, il faut attendre la fin d'acquisition des données pour initier une transmission

Le port GPIO (General Purpose Input Output) remplit les fonctions suivantes :
- signaler le début et la fin de la commande (une commande avec vitesse normale)
- signaler la vitesse supérieure
- reset
- Arrêt d'urgence
- Led : indicateur de connexion au pont
le microcontrôleur de sécurité (51) communique avec le système de commande via trois ports :
- un port en mode interruption, pour signaler l'arrivé d'une commande au uPS
- 2 pour envoyer la commande

Les commandes sont les suivantes :
- reset circuit temporisateur (52), fonctionnement correct = 1
- Sommeil 2
- Réveil 3
- arrêt d'urgence OK 4
- 0 pas de commande

### Le pont

Le pont démarre sur la fréquence de service (broadcast) en mode réception. Il écoute toutes les trames destinées à lui.

À la réception d'une trame :
- Il envoie un acquittement
- Il envoie une trame qui contient sa fréquence de communication
- Après la réception de l'acquittement il bascule vers la fréquence de communication en mode réception
- Active le RTC à 500 ms et initialisé une variable STATE =0
- À chaque réception il incrémente la variable STATE et traite la commande
- Si le temps de 500 ms expire :
   ∘ Si STATE=0 (aucune trame n'est reçu pendant 500), stop les commande encours et bascule vers la fréquence de service.
   ∘ Si STATE >0, (réception d'au moins une trame), reset STATE à 0

### Description détaillée des commandes

| **Fonctions** | | **réalisation de la fonction** | **solution technique** |
|---|---|---|---|
| Alimenter | Partie émettrice | | batterie 3,7V Li ion 250mAh |
| | Partie réceptrice | | Circuit transfo 48VAC 220VAC |
| Démarrage/Klaxon | | Appui pendant 2sec sur un contacteur | contacteur bracelet |
| Déplacer | Droite | Appui sur le contacteur puis déplacement vers la droite de la main | imu + contacteur doigt |
| | Gauche | Appui sur le contacteur puis déplacement vers la gauche de la main | imu + contacteur doigt |
| | Avant | Appui sur le contacteur puis déplacement vers l'avant de la main | imu + contacteur doigt |
| | Arrière | Appui sur le contacteur puis déplacement vers l'arrière de la main | imu + contacteur doigt |
| | Haut | Appui sur le contacteur puis déplacement vers le haut de la main | imu + contacteur doigt |
| | Bas | Appui sur le contacteur puis déplacement vers le bas de la main | imu + contacteur doigt |
| | Droite + avant | Appui sur le contacteur puis déplacement droite puis déplacement avant | imu + contacteur doigt |
| | Droite + arrière | Appui sur le contacteur puis déplacement droite puis déplacement arrière | imu + contacteur doigt |
| | Droite + haut | Appui sur le contacteur puis déplacement droite puis déplacement haut | imu + contacteur doigt |
| Déplacer *2 (déplacement en diagonale) | Droite + bas | Appui sur le contacteur puis déplacement droite puis déplacement bas | imu + contacteur doigt |
| | Gauche + avant | Appui sur le contacteur puis déplacement gauche puis déplacement avant | imu + contacteur doigt |
| | Gauche + arrière | Appui sur le contacteur puis déplacement gauche puis déplacement arrière | imu + contacteur doigt |
| | Gauche + haut | Appui sur le contacteur puis déplacement gauche puis déplacement haut | imu + contacteur doigt |
| | Gauche + bas | Appui sur le contacteur puis déplacement gauche puis déplacement bas | imu + contacteur doigt |
| | Avant + haut | Appui sur le contacteur puis déplacement avant puis déplacement avant | imu + contacteur doigt |
| | Avant + bas | Appui sur le contacteur puis déplacement avant puis déplacement avant | imu + contacteur doigt |
| | Arrière + haut | Appui sur le contacteur puis déplacement avant puis déplacement avant | imu + contacteur doigt |
| | Arrière + bas | Appui sur le contacteur puis déplacement avant puis déplacement avant | imu + contacteur doigt |
| Pianoter | | Appui sur le contacteur puis rotation droite de la main, Appui successif sur le contacteur prenant en compte l'orientation du dernier déplacement | imu + contacteur doigt |
| PV GV | | Après avoir validé un déplacement, relâchement puis Appui sur le contacteur | Contacteur du doigt |
| Arrêt d'urgence | | Appui sur le bouton rouge (partie supérieur) | Contacteur rouge |
| Indiquer visuellement | Déplacemen | Led allumée | led verte |
| | Batterie | Led allumée | led rouge |
| | Batterie | Clignotement | leds verte, |
| | Charge | 3 leds allumées | leds verte, |
| | Connexion | Led allumée | led bleu |
| | Connexion | Clignotement led | clignotement |
| Recharger | | Adaptateur + Câble usb/ jack male sur la prise | Alimentation 5V par prise jack |
| Traiter les données capteurs | | Utilisation de 2 microprocesseurs | STM321053 |
| Mémoriser les mouvements | | Enregistrement des déplacements réalisés avec une indication de date et d'heure | Chip mémoire sur le module de réception |
| Durer une semaine de travail | | Faible consommation / Sleep mode | Composants low energy |
| Changer de chariot | Chariot 1 | De base sans Appui (A chaque Appui, changement suivant cette ordre : chariot 1, chariot 2, chariot 1 et 2) | Contacteur 1 bracelet |
| | Chariot 2 | Appui pour switcher | Contacteur 1 bracelet |
| | Chariot 1 et 2 | Appui pour switcher | Contacteur 1 bracelet |
| Mode tangage | | Appui pour switcher | Contacteur 2 bracelet |
| Switch On/Off light | | Appui pour switcher | Contacteur 3 bracelet |
| Shunt fin de course | | Appui pour switcher | Contacteur 4 bracelet |
| Filtrage de commande | Antipianotage | Suppression de l'action pianotage | soft |
| | Synchronication PV GV | Double Appui contacteur doigt inactif | soft |
| Validation IR pour le démarrage | | Pointer le signal ir en direction de la borne réceptrice | Cellule IR |
| Déplacements sécurisés | | Appui sur 2 contacteurs | Contacteur du doigt et contacteur du bracelet |
| Danger/vibreur | | | vibreur |

### Description fonctionnelle

La première étape est une phase de démarrage et de configuration du gant.

Le système démarre sur la fréquence affectée à l'équipement. L'adresse de la partie réceptrice est codé en usine ou enregistrée par une procédure d'identification (RFID, ...) et d'appariement.

Le microcontrôleur de sécurité entre dans une phase de sommeil pour réduire l'énergie. Le gant sera réveillé par un signal reçu sur l'interface de commande.

L'étape suivante est une phase de connexion :
Après l'obtention de l'adresse, le gant envoi une demande de connexion au pont. Le pont lui transmet son accord, avec la fréquence à utiliser pour la communication (sa fréquence de fonctionnement). Si le pont ne répond pas, le gant retransmet la demande après un temps d'attente aléatoire pour éviter toute collision.

Après la réception des informations de connexion, on commande la reconfiguration du lien radio.

En cas d'échec de connexion (pont déjà utilisé, problème radio), on commande le retour à la fréquence de broadcast

### Après connexion :

Le gant commence à envoyer une trame chaque 250ms pendant un temps THM définie (temps d'homme mort) avec une retransmission de 3 fois. L'utilisateur peut alors commencer à commander le pont. Un bouton est éventuellement prévu pour démarrer le système qui permet à l'utilisateur de passer d'un pont à un autre sans attendre les 5 min (le temps d'homme mort). L'appui sur l'AU fait un reset du système ce qui permet de repasser direct en configuration initiale donc sur la fréquence broadcast

### Phase de commande (gant) :

L'utilisateur Appui sur le bouton pour signifier son intention de commander la machine
- Si le gant n'est pas déjà connecté, on exécute la phase de connexion
   On procède ensuite à l'activation de la phase d'acquisition des données
   ∘ Activation de l'interface homme machine IMU
   ∘ lecture des données
   ∘ Identification du mouvement et mise à jour de la trame.
   ∘ Mise à jour d'une variable pour signaler le bon fonctionnement de cette partie
- La tache au-dessus sera interrompue toutes les 250ms pour envoyer une trame afin de garder la connexion opérationnelle.
- La commande sera incluse dans toutes les trames tant que l'utilisateur n'a pas lâché le bouton
- Après relâchement du bouton
   ∘ Mise à jour de la trame
   ∘ Reset le temps homme mort pour commencer un nouveau cycle

### Arrêt homme mort

Après l'écoulement du temps « homme mort »
- La partie émettrice (gant)
   ∘ Retourne sur la fréquence de broadcast
   ∘ Averti la partie de sécurité (microcontrôleur de sécurité) qu'il va entrer dans un état de non fonctionnement normale.
   ∘ Gestion d'énergie et sommeil, il sera réveillé par le GPIO (bouton utilisateur)
- La partie réceptrice (pont)
   ∘ Stop le pont s'il y un mouvement
   ∘ Retourne sur la fréquence de broadcast

### Arrêt problème émission-réception

- Partie émettrice (gant)
   ∘ Rien à faire, microcontrôleur de sécurité reset le système. Le gant exécute la phase de démarrage et passe directement sur la fréquence de broadcast.
- Partie réceptrice (pont)
   ∘ Arrêter toute commande encours
   ∘ Passer au canal de Broadcast

### Arrêt d'urgence

- l'utilisateur Appui sur le bouton d'arrêt d'urgence.
- Le système envoie une trame d'arrêt d'urgence toutes les 20 ms jusqu'à la réception de l'accusé de réception.
- Le pont reste sur la fréquence d'utilisation, et associé au Bracelet qui a activé l'arrêt d'urgence. Aucun autre utilisateur ne peut utiliser le pont
- Toute trame hormis la trame qui met fin à la situation d'urgence sera rejetée par la partie réceptrice
- Après la réception de la trame qui met fin à Arrêt d'urgence, le pont reste sur la fréquence de fonctionnement pour un fonctionnement normale
- Prévoir un klaxon sur la partie réceptrice pour que l'utilisateur ne met pas le pont en mode arrêt d'urgence et rentre chez lui ce qui rend le pont inutilisable par d'autres personnes.
- Prévoir un bouton d'arrêt d'urgence sur le pont en cas de défaillance radio.

### Variantes de réalisation

L'invention peut donner lieu à différentes variantes.

### Orientation de l'utilisateur dans l'espace

L'invention peut être mise en œuvre selon deux modes de fonctionnement.

Selon le premier mode, l'équipement commande le déplacement dans la direction vue par l'opérateur. Lorsqu'il déplace son bras vers la droite, le mouvement commandé est dirigé vers la droite de l'opérateur, quelle que soit sa position relative par rapport à l'équipement commandé.

Selon un second mode, l'équipement commande le déplacement dans la direction vue par l'opérateur. Lorsqu'il déplace son bras vers la droite, le mouvement commandé est dirigé vers la droite de l'équipement, quelle que soit sa position relative par rapport à l'équipement commandé.

L'équipement de télécommande peut comprendre un capteur de position de l'opérateur dans un référentiel absolu, par exemple par rapport au Nord géographique, ou un capteur de position relative de l'opérateur par rapport à un référentiel de l'équipement commandé.

### Géo-localisation

L'équipement de télécommande peut être muni d'un moyen de géo-localisation pour avoir la position de l'utilisateur par rapport à l'équipement commandé, de façon à permettre la discrimination de plusieurs opérateurs commandant chacun un équipement dans un espace commun, par exemple un chantier sur lequel plusieurs équipements sont actifs et de limiter la distance d'utilisation. L'opérateur doit être dans un rayon de 40 mètres par exemple pour pouvoir piloter le pont, plus loin peut devenir dangereux (mauvaise vision).

### Adaptabilité de l'équipement

L'équipement peut comporter des moyens pour enregistrer des fonctionnalités spécifiques à un équipement commandé. Le microcontrôleur "fonction" s'adapte alors à divers appareils de levage voisins.

## Revendications

1. Equipement de télécommande comportant un circuit électronique comprenant des moyens de détection de la position, de l'orientation et du déplacement de la main et/ou de l'avant-bras tel qu'un accéléromètre, des moyens de transmission radiofréquence d'un signal de commande calculé en fonction de la position, de l'orientation et du déplacement mesuré, et un moyen de liaison avec l'avant-bras d'un opérateur, **caractérisé en ce qu'**il comporte en outre un contacteur (7) apte à être actionné par l'interaction de deux doigts, ledit contacteur (7) commandant l'activation dudit circuit électronique ainsi que le maintien du signal de commande jusqu'à l'arrêt de l'action sur ledit contacteur, ainsi qu'une surface d'appui associée à un contacteur commandant un arrêt d'urgence de l'équipement commandé.

2. Equipement de télécommande selon la revendication 1 **caractérisé en ce que** ledit circuit électronique comporte un détecteur de seuil pour générer un signal de commande lorsque le signal mesuré par ledit moyen de détection dépasse une valeur seuil, ainsi que le maintien de ce signal de commande jusqu'à l'interruption de l'action sur ledit contacteur (7).

3. Equipement de télécommande selon la revendication 1 ou 2 **caractérisé en ce qu'**il est constitué par des modules complémentaires comprenant un bracelet (2), un boîtier (1) contenant le circuit électronique et le moyen de détection, et un contacteur (7) apte à entourer un doigt.

4. Equipement de télécommande selon l'une quelconque des revendications précédentes **caractérisé en ce qu'**il comporte un accéléromètre détectant les accélérations selon trois axes perpendiculaires

5. Equipement de télécommande selon l'une quelconque des revendications précédentes **caractérisé en ce qu'**il comporte un gyroscope détectant les rotations suivant trois directions.

6. Equipement de télécommande selon l'une quelconque des revendications précédentes **caractérisé en ce qu'**il comporte en outre un magnétomètre détectant l'orientation magnétique.

7. Equipement de télécommande selon l'une quelconque des revendications précédentes **caractérisé en ce qu'**il comporte en outre une centrale inertiel composée d'un accéléromètre trois axes perpendiculaire, d'un gyroscope trois axes de rotation et d'un magnétomètre trois axes.

8. Equipement de télécommande selon l'une quelconque des revendications précédentes **caractérisé en ce que** ladite centrale inertiel détecte l'inclinaison, l'orientation et les accélérations selon trois axes perpendiculaires.

9. Equipement de télécommande selon l'une quelconque des revendications précédentes **caractérisé en ce qu'**il comporte en outre un bouton d'arrêt d'urgence.

10. Equipement de télécommande selon l'une quelconque des revendications précédentes **caractérisé en ce qu'**il comporte en outre un connecteur unique du boitier destiné au raccordement du doigtier et à la recharge.

11. Equipement de télécommande selon l'une quelconque des revendications précédentes **caractérisé en ce qu'**il comporte en outre un deuxième contacteur placé sur le circuit électrique et destiné à être commandé par la deuxième main.

12. Equipement de télécommande selon l'une quelconque des revendications précédentes **caractérisé en ce qu'**il comporte en outre une pluralité de contacteurs pour sélectionner l'équipement commandé ou l'une des fonctionnalités de l'équipement commandé.

13. Equipement de télécommande selon l'une quelconque des revendications précédentes **caractérisé en ce qu'**il comporte un contacteur (7) digital, progressif ou à deux états.

14. Equipement de télécommande selon l'une quelconque des revendications précédentes **caractérisé en ce qu'**il comporte en outre des moyens pour commander un mode pianotage en fonction de la mémorisation de la dernière direction détectée par l'accéléromètre et / ou centrale inertielle, et des actions répétées sur le contacteur (7).

15. Equipement de télécommande selon l'une quelconque des revendications précédentes **caractérisé en ce qu'**il comporte en outre des moyens pour commander le déplacement à deux vitesses.

## Patentansprüche

1. Fernsteuerungsvorrichtung mit elektronischer Schaltung, die Mittel zur Erfassung der Position, der Ausrichtung und der Verschiebung der Hand und/oder des Unterarms, wie beispielsweise einen Beschleunigungssensor, Mittel zur Funkfrequenzübertragung eines Steuersignals, das in Abhängigkeit von der gemessenen Position, Ausrichtung und Verschiebung berechnet wird, und ein Mittel zum Verbinden mit dem Unterarm eines Bedieners umfasst, **dadurch gekennzeichnet, dass** sie ferner ein Schütz (7) umfasst, das durch das Zusammenwirken von zwei Fingern aktiviert werden kann, wobei das Schütz (7) die Aktivierung der elektronischen Schaltung sowie die Aufrechterhaltung des Steuersignals bis zum Stoppen der Wirkung auf das Schütz steuert, sowie eine Auflagefläche in Verbindung mit einem Schütz, der eine Notabschaltung der gesteuerten Ausrüstung steuert.

2. Fernsteuerungsvorrichtung nach Anspruch 1, **dadurch gekennzeichnet, dass** die elektronische Schaltung einen Grenzwertdetektor umfasst, der ein Steuersignal erzeugt, wenn das vom Erfassungsmittel gemessene Signal einen Grenzwert überschreitet, und dieses Steuersignal aufrecht erhält, bis die Wirkung auf das Schütz (7) unterbrochen wird.

3. Fernsteuerungsvorrichtung nach Anspruch 1 oder 2, **dadurch gekennzeichnet, dass** sie aus komplementären Modulen besteht, die ein Armband (2), ein Gehäuse (1) mit elektronischer Schaltung und das Erfassungsmittel umfasst, sowie ein Schütz (7), das sich um einen Finger wickeln kann.

4. Fernsteuerungsvorrichtung nach einem der vorhergehenden Ansprüche, **dadurch gekennzeichnet, dass** sie einen Beschleunigungsmesser beinhaltet, der Beschleunigungen entlang drei senkrechter Achsen erfasst.

5. Fernsteuerungsvorrichtung nach einem der vorhergehenden Ansprüche, **dadurch gekennzeichnet, dass** sie ein Gyroskop beinhaltet, das Drehungen in drei Richtungen erfasst.

6. Fernsteuerungsvorrichtung nach einem der vorhergehenden Ansprüche, **dadurch gekennzeichnet, dass** sie des Weiteren ein Magnetometer umfasst, das die magnetische Ausrichtung erfasst.

7. Fernsteuerungsvorrichtung nach einem der vorhergehenden Ansprüche, **dadurch gekennzeichnet, dass** sie des Weiteren eine Trägheitszentrale bestehend aus einem senkrechten dreiachsigen Beschleunigungsmesser, einem Gyroskop mit drei Drehachsen und einem dreiachsigen Magnetometer umfasst.

8. Fernsteuerungsvorrichtung nach einem der vorhergehenden Ansprüche, **dadurch gekennzeichnet, dass** die Trägheitszentrale die Neigung, Ausrichtung und Beschleunigungen entlang drei senkrechter Achsen erfasst.

9. Fernsteuerungsvorrichtung nach einem der vorhergehenden Ansprüche, **dadurch gekennzeichnet, dass** sie des Weiteren einen Not-Aus-Schalter umfasst.

10. Fernsteuerungsvorrichtung nach einem der vorhergehenden Ansprüche, **dadurch gekennzeichnet, dass** sie des Weiteren einen einzigen Verbinder am Gehäuse umfasst, der zum Anschließen der Fingerkuppe und zum Aufladen bestimmt ist.

11. Fernsteuerungsvorrichtung nach einem der vorhergehenden Ansprüche, **dadurch gekennzeichnet, dass** sie des Weiteren ein zweites Schütz beinhaltet, das auf der elektrischen Schaltung angeordnet und dazu bestimmt ist, von der zweiten Hand bedient zu werden.

12. Fernsteuerungsvorrichtung nach einem der vorhergehenden Ansprüche, **dadurch gekennzeichnet, dass** sie des Weiteren eine Vielzahl an Schützen zur Auswahl der gesteuerten Vorrichtung oder einer der Funktionen der gesteuerten Vorrichtung umfasst.

13. Fernsteuerungsvorrichtung nach einem der vorhergehenden Ansprüche, **dadurch gekennzeichnet, dass** sie ein digitales, progressives und duales Schütz (7) umfasst.

14. Fernsteuerungsvorrichtung nach einem der vorhergehenden Ansprüche, **dadurch gekennzeichnet, dass** sie des Weiteren Mittel zur Steuerung eines Tippbetriebs gemäß der Speicherung der letzten, vom Beschleunigungsmesser und/oder der Trägheitszentrale erfassten Richtung, und wiederholte Einwirkungen auf das Schütz (7) umfasst.

15. Fernsteuerungsvorrichtung nach einem der vorhergehenden Ansprüche, **dadurch gekennzeichnet, dass** sie des Weiteren Mittel zum Steuern der Bewegung in zwei Geschwindigkeiten umfasst.

## Claims

1. A remote control including an electronic circuit comprising means for detecting the position, orientation and movement of the hand and/or forearm such as an accelerometer, means for transmitting at radio frequency a control signal calculated depending on the measured position, orientation and movement, and a means for fastening to the forearm of an operator, **characterized in that** it furthermore includes a contactor (7) able to be actuated by the interaction of two fingers, with said contactor (7) controlling the activation of said electronic circuit and the maintenance of the control signal until the action of said contactor is stopped, and a bearing surface associated with a contactor controlling an emergency stop of the controlled equipment.

2. A remote control according to claim 1, **characterized in that** said electronic circuit comprises a threshold detector for generating a control signal when the signal measured by said detection means exceeds a threshold value, as well as the maintenance of such control signal until the action on said contactor (7) is stopped.

3. A remote control according to claim 1 or 2, **characterized in that** it consists of complementary modules comprising a strap (2), a box (1) containing the electronic circuit and the detection means, and a contactor (7) adapted to be positioned around one finger.

4. A remote control according to any one of the preceding claims, **characterized in that** it comprises an accelerometer detecting accelerations along three perpendicular axes.

5. A remote control according to any one of the preceding claims, **characterized in that** it comprises a gyroscope detecting rotations in three directions.

6. A remote control according to any one of the preceding claims, **characterized in that** it further comprises a magnetometer for detecting the magnetic orientation.

7. A remote control according to any one of the preceding claims, **characterized in that** it further comprises an inertial unit consisting of one accelerometer with three perpendicular axes, a gyroscope with three rotational axes and a three-axis magnetometer.

8. A remote control according to any one of the preceding claims, **characterized in that** said inertial unit detects the angle of slope, the orientation and the accelerations along three perpendicular axes.

9. A remote control according to any one of the preceding claims, **characterized in that** it further comprises an emergency stop button.

10. A remote control according to any one of the preceding claims, **characterized in that** it further includes a single connector of the box intended for connecting the finger stall and the charger.

11. A remote control according to any one of the preceding claims, **characterized in that** it further comprises a second contactor positioned in the electrical circuit and intended to be controlled by the second hand.

12. A remote control according to any one of the preceding claims, **characterized in that** it further comprises a plurality of contactors for selecting the controlled device or one of the functionalities of the controlled equipment.

13. A remote control according to any one of the preceding claims, **characterized in that** it comprises a digital, stepping or two-way contactor (7).

14. A remote control according to any one of the preceding claims, **characterized in that** it further comprises means for controlling a strumming mode according to the storage of the last direction detected by the accelerometer and/or the inertial unit, and on the repeated actions on the contactor (7).

15. A remote control according to any one of the preceding claims, **characterized in that** it further comprises means for controlling the two-rate displacement.
